# EUROPEAN PATENT SPECIFICATION

(11) **EP 4 166 409 B1**
(45) Date of publication and mention of the grant of the patent: **12.06.2024**
(21) Application number: 21202188.5
(22) Date of filing: 12.10.2021
(51) Int. Cl.: B60W 50/00, B60W 60/00, B60K 35/00, B60W 50/08, B60W 50/14

(54) **A DRIVING CONTROL SYSTEM FOR A VEHICLE**
FAHRSTEUERUNGSSYSTEM FÜR EIN FAHRZEUG
SYSTÈME DE COMMANDE DE CONDUITE POUR UN VÉHICULE

(43) Date of publication of application: 19.04.2023
(73) Proprietor: Volvo Car Corporation, 40531 Göteborg (SE)
(72) Inventor: BROSTRÖM, Robert, 40531 Göteborg (SE); HALLBERG, Simon, 40531 Göteborg (SE)
(74) Representative: Maiwald GmbH

(56) References cited:
- DE-A1- 10 310 719
- DE-A1-102015 202 820
- US-A1- 2017 297 586
- US-A1- 2021 053 487
- US-A1- 2021 107 519
- US-B2- 10 449 957

## Description

### TECHNICAL FIELD

The present invention relates to a driving control system for a vehicle, a vehicle capable to operate with such a driving control system, a method for a driving control for a vehicle and a computer program element for a driving control.

### BACKGROUND ART

As autonomous driving technology for vehicles improves, users travelling with such vehicles operate the vehicles more and more passively and the vehicles take over operational decisions for the users. A system and method for operating such an autonomous vehicle is described in US 10, 449, 957 B2. However, even though such vehicles provide comfort to the users, they may have difficulties trusting a system that they cannot influence. Such suspicion may increase, if the user travels with a vehicle of another person in an unfamiliar situation such as different driving style, different ambient preference, demand of an extra equipment, etc.

### SUMMARY

Hence, there may be a need to provide an improved driving control system, which may provide customized operational decisions for driving a vehicle.

The problem is at least partially solved or alleviated by the subject matter of the independent claims of the present invention, wherein further embodiments are incorporated in the dependent claims. It should be noted that the aspects of the invention described in the driving control system for a vehicle, the vehicle capable to operate with such a driving control system, the method for a driving control for a vehicle and the computer program element for a driving control.

According to the present invention, a driving control system for a vehicle is presented. The driving control system comprises a sensor unit, a data storage unit, a user communication means and a control unit. The sensor unit is arrangeable in a first vehicle and configured to generate at least one user-specific driving parameter of at least one user travelling with the first vehicle. The at least one user-specific driving parameter is based on a driver's driving behavior of the first vehicle. The user communication means is configured to receive an input of the user to store the at least one user-specific driving parameter in the data storage unit and activate the stored at least one user-specific driving parameter in a second vehicle to be occupied by the user. The control unit is configured to transmit the at least one user-specific driving parameter of the user from the data storage unit to the second vehicle. The control unit is configured to control the second vehicle based on the transmitted at least one user-specific driving parameter. The user communication means is arrangeable in a mobile device of the user.

The driving control system according to the present invention allows a customized travel of a vehicle, even though a user travels with any vehicle. The term customized travel may mean that user-specific driving preferences of the user may be individually set in vehicle. The user communication means, which may be integrated in the mobile device of the user, may facilitate an exchange of the user-specific preferences among various vehicles and/or devices, thereby the vehicles can easily implement the customized travel. Accordingly, the vehicles may provide more comfort and trust to the user.

The driving control system may be suitable for a vehicle, which particularly comprises an autonomous function to support a driver. The autonomous function may allow a fully-automated self-driving mode of the vehicle or at least an automated driving mode with little supervision of the driver of the vehicle. Such vehicles comprising the autonomous function may utilize various sensor technologies for a safe travel.

The sensor unit may comprise a plurality of sensor elements arranged inside and/or outside the vehicle to detect driving parameters, interior parameters and/or surrounding parameters of the vehicle. The sensor unit may comprise vehicle control sensor elements, vehicle monitoring sensor elements, environment monitoring sensor elements, driver monitoring sensor elements or the like. The vehicle control sensor elements may comprise a longitudinal acceleration/deceleration sensor element, a lateral acceleration /deceleration sensor element, a steering angle sensor element, etc. The monitoring sensor elements may comprise optical sensor elements, acoustic sensor elements, temperature sensor elements, etc.

Such various sensor elements may be arranged in the first vehicle, in which the user is occupied. The user may be a driver or a passenger of the first vehicle. At least one of the sensor elements of the sensor unit may detect at least one user-specific driving parameter during travelling the first vehicle. Preferably, the sensor unit or the sensor elements may be configured to generate a plurality of user-specific driving parameters. In case the user is the driver of the first vehicle, the at least one user-specific driving parameter may be based on the user's driving behavior. However, if the driver of the first vehicle differs from the user of the driving control system, the at least one user-specific driving parameter may be based on the driver's driving behavior.

The user-specific driving parameter may be, for instance, related to operational decisions of the vehicle such as acceleration, braking, cruise control, lane changing, turning speed etc. Generally, such parameters are strongly influenced by a driving style or driving habit of the driver.

The user communication means may be an interface between the user and the vehicle. In case the user wishes to save the at least one user-specific driving parameter of the current travelling vehicle, the user may be able to prompt the sensor unit or control unit to transmit the generated user-specific driving parameter to the data storage unit. The user communication means may allow the user to enter a command via a (touch) screen, a voice control and/or a gesture control.

The user communication means may be integrated in the mobile device of the user and executed by a mobile application. The control unit may be coupled with the mobile application. Accordingly, the user may have an easy access to the driving control system regardless of any particular travelling vehicle. The mobile device may be any network-compatible portable devices, for instance, a smartphone, a smartwatch, a laptop, a tablet, a smart speaker, etc.

The data storage unit may be configured to receive the at least one user-specific driving parameter from the sensor unit based on the user's input via the user communication means. Preferably, the data storage unit may be cloud-based, thereby an access to the data storage unit may not be limited to an access location of the user as long as a network connection to the data storage unit is available. Additionally or alternatively, each vehicle may comprise a local data storage unit, which may be synchronized with the cloud-based data storage unit in a predefined time interval or in real time.

After traveling with the first vehicle, the user may ride a next vehicle to move from one location to another. The next vehicle, i.e. the second vehicle may provide a partial autonomous driving function or a fully automated driving function. For instance, the second vehicle may be a robocab, a taxi or a vehicle of another person. The second vehicle may be the same or a different vehicle as the first vehicle.

In the second vehicle, the user is able to access the data storage unit via the user communication means and see at least one of the user-specific driving parameters stored in the data storage unit. Further, the user is able to select one user-specific driving parameter via the user communication means for loading and/or adopting it in the second vehicle.

According to the user's selection, the control unit may prompt the data storage unit to transmit the selected user-specific driving parameter to the second vehicle. Moreover, the control unit is configured to adjust driving parameters of the second vehicle based on the user-specific driving parameter. Accordingly, the second vehicle may easily implement a customized travel even in a various driving environment, thus, provide more comfort and trust to the user.

In an example, the user is a driver or a passenger in the first vehicle and/or a driver or a passenger in the second vehicle. In other words, the user may be able to collect his own driving preference or that of another person. The user may be also able to adjust the selected driving preference, i.e. user-specific driving parameter during travelling with the same or different vehicle at the later moment as a passenger or a driver. Still in other words, the user may not be necessarily a driver of a vehicle to collect and/or adopt the at least one user-specific driving parameter.

In an example, the control unit is configured to generate a user profile of the user based on the at least one user-specific driving parameter. The control unit is configured to transmit the at least one user-specific driving parameter only if the user activates the at least one user-specific driving parameter in the second vehicle. The control unit may be arranged in the first vehicle, the second vehicle and/or in the mobile device of the user. The control unit may be also arranged in a cloud system. The control unit may be configured to sort the user-specific driving parameters stored in the data storage unit. In particular, the user may create his own user profile via the user communication means, in which the user-specific driving parameters may be categorized.

The user may also have a possibility to select a particular user-specific driving parameter through the user profile via the user communication means. Hence, the control unit may prompt the data storage unit to transmit the selected user-specific driving parameter to the second vehicle, if the user confirms via the user communication means that the user profile and/or the user-specific driving parameter may be activated in the second vehicle to control it. In case of a missing activation or confirmation of the user, the control unit may deny to transmit the user-specific driving parameter from the data storage unit to the second vehicle.

In an example, the at least one user-specific driving parameter is one of a distance to a preceding vehicle, lane positioning, turning speed, lane correction, overtaking, a brake velocity, a steering angle acceleration and/or a brake distance. Since the user-specific driving parameter may be based on the driving behavior of the driver of the first vehicle, it may reflect operational preferences of the user for driving the vehicle. Thus, the user-specific driving parameter may include acceleration, deceleration, lane-changing, speed of cornering, driving speed (e.g., a speed equal to a speed limit, a speed that is 10% under/over the speed limit, a speed equal to other cars traveling a route, a speed within a speed range, etc.) and/or a fuel performance. As a technological background information, which is not a part of the invention, the user-specific driving parameter may also comprise a demeanor of the driver such as holding the steering wheel with both hands, using mirrors, looking at traffic situation, not interacting with smartphone and other digital devices while driving, etc., which may significantly influence driving if the user travels with a vehicle manually driven.

In an example, the sensor unit, the data storage unit and/or the control unit comprise a wireless communication element. Since the sensor unit, the data storage unit and/or the control unit may be spatially separated from each other, i.e. the sensor unit may be arranged in the first vehicle, the data storage unit may be a cloud-based storage system and the control unit may be arranged at the mobile device of the user and/or in the cloud system, their mutual communication may be performed preferably via the wireless communication element. The wireless communication element may comprise wireless internet access, Wi-Fi, Bluetooth or the like.

In an example, the control unit is configured to analyze a tendency of a change of the user-specific driving parameter stored in the data storage unit and adjust the user-specific driving parameter based on the tendency. In other words, the control unit may be configured to perform a dynamic adaption of the user-specific driving parameter to be transmitted to the second vehicle. The control unit may monitor the change of the user-specific driving parameter logged within a same category or group of the user and adapt the user-specific driving parameter to be transmitted to the second vehicle based on the tendency of the change of the user-specific driving parameter stored in the data storage unit.

For instance, the user may enter an input via the communication means to store one or more user-specific driving parameters of a driver X driving the first vehicle. At the later moment, the use may save a new user-specific driving parameter of the driver X again. The control unit may analyze the user-specific driving parameters of the driver X accumulated in the data storage unit to transmit an adapted user-specific driving parameters of the driver X to the second vehicle, if the user activate the user profile of the driver X via the communication means.

In an example, the driving control system further comprises a graphical user interface unit configured to show the user profile, the at least one user-specific driving parameter and/or the tendency of the change of the at least one user-specific driving parameter, which is transmitted to the second vehicle. The graphical user interface unit may be integrated in the communication means, the first vehicle and/or the second vehicle. Accordingly, the graphical user interface unit may be integrated in the mobile device of the user, a Center Stack Display (SCD), an Infotainment Head Unit (IHU) of the first and/or second vehicle. Additionally or alternatively, the graphical user interface unit may be also integrated at each seat, for instance at a rear seat, in the first or second vehicle such that the user may use it at every seat of the vehicle.

The graphical user interface unit may facilitate the utilization of the driving control system by graphically constituting data exchange among the data storage unit, the first vehicle and/or the second vehicle. The graphical user interface unit may also allow the user to enter an input via a display of the graphical user interface unit.

In an example, the graphical user interface unit is further configured to show two or more different user profiles. The user may be able to access to one or more user profiles saved by another person in the data storage unit and/or share his own profile with other persons. To exchange the user profiles among different people, a mutual approval of a possessor of each user profile may be required. In an example, the graphical user interface unit is further configured to receive an input of the user selected from the different user profiles shown in the graphical user interface unit.

In an example, the user profile further comprises at least one ambient preference of the user. The ambient preference may comprise window setting, cabin temperature, seat adjustment, cabin lighting, music/sound setting, etc. The user may store his ambient preference together with the user-specific driving parameter in the data storage unit and activate it in the second vehicle via the communication means and/or the graphical user interface unit. Accordingly, the second vehicle may provide the user a familiar traveling environment, thus a more comfort travel.

In an example, the user profile further comprises information about at least one user-specific facility. The user-specific facility may comprise at least one auxiliary requirement such as children car seat, wheel chair fixing element, PC table, baby stroller space, etc. The user may store information about one or more user-specific facilities together with the user-specific driving parameter and/or the ambient preference in the data storage unit and load the information in the second vehicle via the communication means and/or the graphical user interface unit. Based on the information, the second vehicle, particularly a taxi or a robocab, may be equipped before riding the user. Accordingly, the second vehicle may provide the user a customized traveling environment, thus a more comfort travel.

According to the present invention, a vehicle is presented. The vehicle comprises a driver assistance system, which is configured to operate with a driving control system as described above. The driver assistance system may allow the vehicle to take over partially or entirely operational decisions during driving based on the user's input received via a communication means, thus provide comfort to the user.

In an example, the vehicle is configured to be propelled fully automated. By providing the driving control system to an autonomous vehicle, which operates fully automated without any human control, the user travelling with the vehicle may obtain a customized familiar driving environment. The vehicle may be a user's own vehicle, of a vehicle of another person, a taxi and/or a robocab. Accordingly, the second vehicle may provide the user a customized traveling environment, thus a more comfort travel.

According to the present invention, a method for a driving control for a vehicle is presented.

The method comprises, but not necessarily in this order:
- generating at least one user-specific driving parameter of at least one user travelling with a first vehicle,
- receiving an input of at least one the user and storing the user-specific driving parameter in a data storage unit,
- activating the stored at least one user-specific driving parameter in a second vehicle to be occupied by the user,
- transmitting the at least one user-specific driving parameter of the user from the data storage unit to the second vehicle, and
- controlling the second vehicle based on the at least one user-specific driving parameter.

The sensor unit is arrangeable in the first vehicle. The at least one user-specific driving parameter is based on a driver's driving behavior of the first vehicle and the communication means is arrangeable in a mobile device of the user. The transmission is executed using a mobile application integrated in a mobile device of the user. The driving parameter is transmitted only if the user activates the at least one user-specific driving parameter in the second vehicle.

According to the present invention, a computer program element is presented. The computer program element is configured for a driving control system as described above. The program element is adapted to perform the method steps as described above, when being executed by a processing element.

It should be noted that the above embodiments may be combined with each other irrespective of the aspect involved. Accordingly, the method may be combined with structural features and, likewise, the system may be combined with features described above with regard to the method.

These and other aspects of the present embodiments will become apparent from and elucidated with reference to the embodiments described hereinafter.

### BRIEF DESCRIPTION OF DRAWINGS

Exemplary embodiments will be described in the following with reference to the following drawings.
- Fig. 1: shows schematically and exemplarily an embodiment of a vehicle operating with a driving control system according to the present disclosure.
- Fig. 2: shows schematically and exemplarily an embodiment of a method for a driving control for a vehicle according to the present disclosure.

### DESCRIPTION OF EMBODIMENTS

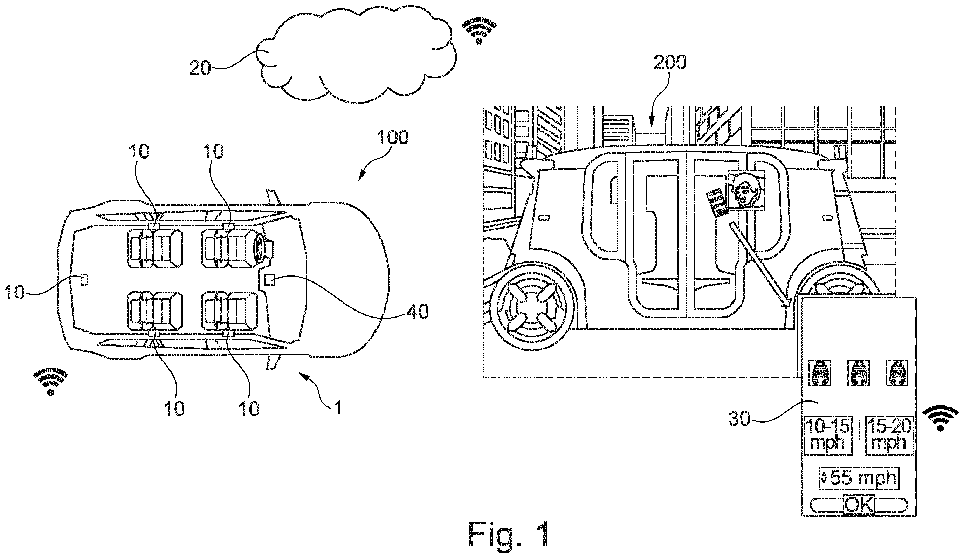

Fig. 1 shows vehicles 100, 200 comprising a driver assistance system (not shown), which is supported by a driving control system 1. The driver assistance system may assist a driver of the vehicle for any operational decisions or allow an autonomous travelling of the vehicle. The vehicles 100, 200 may be a private vehicle of a user or another person, a shared vehicle, a taxi and/or a robocab.

The driving control system 1 for a vehicle comprises a sensor unit 10, a data storage unit 20, a user communication means 30 and a control unit (not shown). The sensor unit 10 is arrangeable in a first vehicle 100 and configured to generate at least one user-specific driving parameter of at least one user travelling with the first vehicle 100. The user may be a driver or a passenger of the first vehicle 100. The sensor unit 10 comprises a plurality of sensor elements such as vehicle control sensor elements, vehicle monitoring sensor elements, environment monitoring sensor elements, driver monitoring sensor elements or the like. The at least one user-specific driving parameter is based on a driver's driving behavior of the first vehicle 100 and comprises, for instance a distance to a preceding vehicle, lane positioning, turning speed, lane correction, overtaking, a brake velocity, a steering angle acceleration and/or a brake distance.

The user communication means 30 is configured to receive an input of the user to store the at least one user-specific driving parameter in the data storage unit 20 and activate the stored at least one user-specific driving parameter in a second vehicle 200 to be occupied by the user. The second vehicle 200 may be the same or a different vehicle as the first vehicle 100. In the second vehicle 200 the user may be a driver or passenger. The user communication means 30 is arrangeable in a mobile device of the user to facilitate a utilization of the driving control system 1.

The data storage unit 20 is configured to receive the at least one user-specific driving parameter from the sensor unit 10 based on the user's input via the user communication means 30. Preferably, the data storage unit 20 is cloud-based, thereby an access to the data storage unit 20 may not be limited to an access location of the user as long as a network connection to the data storage unit 20 is available.

The control unit is configured to generate a user profile and categorize the user- specific driving parameter in the respective user profile based on the user's input via the user communication means 30. The user profile further comprises at least one ambient preference of the user. The ambient preference may comprise cabin temperature, seat adjustment, cabin lighting, music/sound setting, etc. the user profile further comprises information about at least one user-specific facility. The user-specific facility may comprise at least one auxiliary requirement such as children car seat, wheel chair, PC table, baby stroller, etc.

Further, the control unit is configured to transmit the at least one user-specific driving parameter from the data storage unit 20 to the second vehicle 200, if the user actives the user profile in the second vehicle 200. Based on the transmitted at least one user-specific driving parameter the control unit controls the second vehicle 200.

The control unit is further configured to analyze a tendency of a change of the at least one user-specific driving parameter stored in the data storage unit 20 and adjust the at least one user-specific driving parameter based on the tendency. In other words, the control unit may be configured to perform a dynamic adaption of the user-specific driving parameter to be transmitted to the second vehicle 200.

The sensor unit 10, the data storage unit 20 and/or the control unit comprise a wireless communication element. The wireless communication element may comprise wireless internet access, Wi-Fi, Bluetooth or the like.

The driving control system 1 further comprises a graphical user interface unit 40 configured to show the user profile, the at least one user-specific driving parameter, which is transmitted to the second vehicle 200. The graphical user interface unit 40 also allows the user to enter the input via a display of the graphical user interface unit 40.

The graphical user interface unit 40 may be integrated in the user communication means 30, the first vehicle 100 and/or the second vehicle 200. The graphical user interface unit 40 may facilitate the utilization of the driving control system 1 by graphically constituting data exchange among the data storage unit 20, the first vehicle 100 and/or the second vehicle 200. The graphical user interface unit 40 is further configured to show two or more different user profiles.

Accordingly, the driving control system 1 allows a customized travel of a vehicle, even though the vehicle does not belong to a user occupied in the vehicle. By allowing the user-specific preferences to transmit among different vehicles, with which the user travels, the vehicles can easily implement the customized travel. Accordingly, the vehicles may provide more comfort and trust to the user.

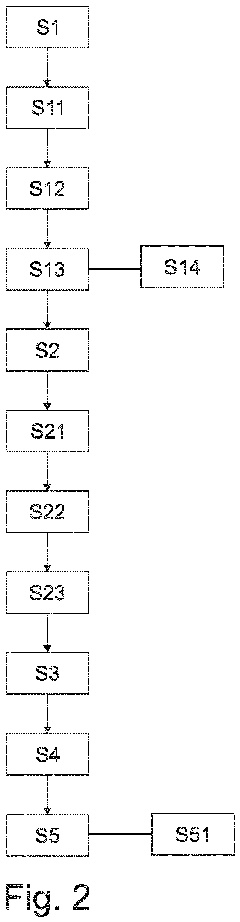

Fig.2 shows a schematic flow chart of a method for a driving control for a vehicle. The method comprises

| | |
|---|---|
| S1: | generating at least one user-specific driving parameter of at least one user travelling with a first vehicle 100, |
| S11: | receiving an input of a user to store the at least one user-specific driving parameter, |
| S12: | generating a user profile of the user based on the at least one user-specific driving parameter, |
| S13: | analyzing a tendency of a change of the at least one user-specific driving parameter stored in the data storage unit 20 and adjusting the at least one user-specific driving parameter based on the tendency, |
| S14: | manually modifying the at least one user-specific driving parameter, |
| S2: | storing the at least one user-specific driving parameter in a data storage unit 20, |
| S21: | showing user profile(s) in graphical user interface unit 40, |
| S22: | receiving an input of the user selected from the user profiles, |
| S23: | showing the at least one user-specific driving parameter and/or the tendency of the change of the at least one user-specific driving parameter in the graphical user interface unit 40, which being transmitted to the second vehicle 200 of a second vehicle 200 to be occupied by the user, |
| S3: | activating the at least one user-specific driving parameter in the second vehicle 200, |
| S4: | transmitting the at least one user-specific driving parameter of the user from the data storage unit 20 to the second vehicle 200, |
| S5: | controlling the second vehicle 200 based on the at least one user-specific driving parameter, and |
| S51: | receiving a feedback on the at least one user-specific driving parameter applied in the second vehicle 200. |

The driving control system and the method for a driving control is suitable for both of an autonomous vehicle and a manually driven vehicle comprising a driver assistance system. Further, the user of the driving control system may be either a driver or a passenger of the vehicles. For instance, even though the second vehicle is a taxi, the user may be able to active and/or modify his/her user-specific driving preferences and provide the driver or the driving control system a feedback after his/her travel ends.

It has to be noted that embodiments of the disclosure are described with reference to different subject matters. In particular, some embodiments are described with reference to method type claims whereas other embodiments are described with reference to the device type claims. However, a person skilled in the art will gather from the above and the following description that, unless otherwise notified, in addition to any combination of features belonging to one type of subject matter also any combination between features relating to different subject matters is considered to be disclosed with this application. However, all features can be combined providing synergetic effects that are more than the simple summation of the features.

While the invention has been illustrated and described in detail in the drawings and description, such illustration and description are to be considered illustrative or exemplary and not restrictive. The disclosure is not limited to the disclosed embodiments. Other variations to the disclosed embodiments can be understood and effected by those skilled in the art in practicing the claimed invention, from a study of the drawings, the disclosure, and the dependent claims.

In the claims, the word "comprising" does not exclude other elements or steps, and the indefinite article "a" or "an" does not exclude a plurality. A single processor or other unit may fulfil the functions of several items re-cited in the claims. The mere fact that certain measures are re-cited in mutually different dependent claims does not indicate that a combination of these measures cannot be used to advantage. Any reference signs in the claims should not be construed as limiting the scope.

## Claims

1. A driving control system (1) for a vehicle, comprising
- a sensor unit (10),
- a data storage unit (20),
- a user communication means (30), and
- a control unit,
the sensor unit (10) being arrangeable in a first vehicle (100) and configured to generate at least one user-specific driving parameter of at least one user travelling with the first vehicle (100),
the at least one user-specific driving parameter being based on a driver's driving behavior of the first vehicle (100),
the user communication means (30) being configured to receive an input of the user to store the at least one user-specific driving parameter in the data storage unit (20) and activate the stored at least one user-specific driving parameter in a second vehicle (200) to be occupied by the user,
the control unit being configured to transmit the at least one user-specific driving parameter of the user from the data storage unit (20) to the second vehicle (200),
the control unit being configured to control the second vehicle (200) based on the transmitted at least one user-specific driving parameter,
the control unit further being configured to generate a user profile of the user based on the at least one user-specific driving parameter, the control unit being configured to transmit the at least one user-specific driving parameter only if the user activates the at least one user-specific driving parameter in the second vehicle (200), and
the user communication means (30) being executable by a mobile application integrated in a mobile device of the user.

2. The driving control system (1) according to claim 1, the user being a driver or a passenger in the first vehicle (100) and/or a driver or a passenger in the second vehicle (200).

3. The driving control system (1) according to claim 1 or 2, the at least one user-specific driving parameter being one of a distance to a preceding vehicle, lane positioning, turning speed, lane correction, overtaking, a brake velocity, a steering angle acceleration and/or a brake distance.

4. The driving control system (1) according to claim 1, the sensor unit (10), the data storage unit (20) and/or the control unit comprising a wireless communication element.

5. The driving control system (1) according to any of the preceding claims, the control unit being configured to analyze a tendency of a change of the at least one user-specific driving parameter stored in the data storage unit (20) and adjust the at least one user-specific driving parameter based on the tendency.

6. The driving control system (1) according to claim 1, further comprising a graphical user interface unit (40) configured to show the user profile, the at least one user-specific driving parameter and/or the tendency of the change of the at least one user-specific driving parameter, being transmitted to the second vehicle (200).

7. The driving control system (1) according to claim 6, the graphical user interface unit (40) being further configured to show two or more different user profiles.

8. The driving control system (1) according to claim 7, the graphical user interface unit (40) being further configured to receive an input of the user selected from the different user profiles shown in the graphical user interface unit (40).

9. The driving control system (1) according to claim 1, the user profile further comprising at least one ambient preference of the user.

10. The driving control system (1) according to claim 1, the user profile further comprising information about at least one user-specific facility.

11. A vehicle comprising a driver assistance system, the driver assistance system being configured to operate with a driving control system (1) according to any of the preceding claims 1 to 10.

12. The vehicle according to claim 11 being configured to be propelled fully automated.

13. A method for a driving control for a vehicle, comprising
- generating (S1) at least one user-specific driving parameter of at least one user travelling with a first vehicle (100),
- storing (S2) the at least one user-specific driving parameter in a data storage unit (20) based on an input of the user,
- activating (S3) the stored at least one user-specific driving parameter in a second vehicle (200) to be occupied by the user,
- transmitting (S4) the at least one user-specific driving parameter of the user from the data storage unit (20) to the second vehicle (200),
- generating a user profile of the user based on the at least one user-specific driving parameter, and
- controlling (S5) the second vehicle (200) based on the at least one user-specific driving parameter.
the sensor unit (10) being arrangeable in the first vehicle (100),
the at least one user-specific driving parameter being based on a driver's driving behavior of the first vehicle (100),
the transmission being executable by a mobile application integrated in a mobile device of the user, and
the method further comprising to transmit the at least one user-specific driving parameter only if the user activates the at least one user-specific driving parameter in the second vehicle (200).

14. A computer program element, for a driving control system (1) according to claims 1 to 10, which, when being executed by a processing element, being adapted to perform the method steps of the method claim 13.

## Patentansprüche

1. Fahrsteuerungssystem (1) für ein Fahrzeug, wobei das Fahrsteuerungssystem umfasst:
- eine Sensoreinheit (10),
- eine Datenspeichereinheit (20),
- ein Benutzerkommunikationsmittel (30) und
- eine Steuereinheit,
wobei die Sensoreinheit (10) in einem ersten Fahrzeug (100) angeordnet werden kann und dafür eingerichtet ist, mindestens einen benutzerspezifischen Fahrparameter mindestens eines mit dem ersten Fahrzeug (100) fahrenden Benutzers zu generieren,
wobei der mindestens eine benutzerspezifische Fahrparameter auf dem Fahrverhalten eines Fahrers des ersten Fahrzeugs (100) basiert,
das Benutzerkommunikationsmittel (30) dafür eingerichtet ist, eine Eingabe des Benutzers zu empfangen, den mindestens einen benutzerspezifischen Fahrparameter in der Datenspeichereinheit (20) zu speichern und den gespeicherten mindestens einen benutzerspezifischen Fahrparameter in einem zweiten Fahrzeug (200), das durch den Benutzer genutzt werden soll, zu aktivieren,
wobei die Steuereinheit dafür eingerichtet ist, den mindestens einen benutzerspezifischen Fahrparameter des Benutzers von der Datenspeichereinheit (20) zu dem zweiten Fahrzeug (200) zu senden,
wobei die Steuereinheit dafür eingerichtet ist, das zweite Fahrzeug (200) auf der Grundlage des gesendeten mindestens einen benutzerspezifischen Fahrparameters zu steuern,
die Steuereinheit des Weiteren dafür eingerichtet ist, ein Benutzerprofil des Benutzers auf der Grundlage des mindestens einen benutzerspezifischen Fahrparameter zu generieren, wobei die Steuereinheit dafür eingerichtet ist, den mindestens einen benutzerspezifischen Fahrparameter nur dann zu senden, wenn der Benutzer den mindestens einen benutzerspezifischen Fahrparameter in dem zweiten Fahrzeug (200) aktiviert, und
wobei das Benutzerkommunikationsmittel (30) durch eine in eine Mobilvorrichtung des Benutzers integrierte Mobilanwendung ausgeführt werden kann.

2. Fahrsteuerungssystem (1) nach Anspruch 1, wobei der Benutzer ein Fahrer oder ein Mitfahrer in dem ersten Fahrzeug (100) und/oder ein Fahrer oder ein Mitfahrer in dem zweiten Fahrzeug (200) ist.

3. Fahrsteuerungssystem (1) nach Anspruch 1 oder 2, wobei der mindestens eine benutzerspezifische Fahrparameter eines von einer Entfernung zu einem vorausfahrenden Fahrzeug, einer Fahrspurpositionierung, einer Kurvenfahrgeschwindigkeit, einer Fahrspurkorrektur, einem Überholvorgang, einer Bremsgeschwindigkeit, einer Lenkwinkelbeschleunigung und/oder einem Bremsweg ist.

4. Fahrsteuerungssystem (1) nach Anspruch 1, wobei die Sensoreinheit (10), die Datenspeichereinheit (20) und/oder die Steuereinheit ein Drahtloskommunikationselement umfassen.

5. Fahrsteuerungssystem (1) nach einem der vorangehenden Ansprüche, wobei die Steuereinheit dafür eingerichtet ist, eine Tendenz einer Änderung des mindestens einen in der Datenspeichereinheit (20) gespeicherten benutzerspezifischen Fahrparameters zu analysieren und den mindestens einen benutzerspezifischen Fahrparameter auf der Grundlage der Tendenz einzustellen.

6. Fahrsteuerungssystem (1) nach Anspruch 1, des Weiteren umfassend eine grafische Benutzerschnittstelleneinheit (40), die dafür eingerichtet ist, das Benutzerprofil, den mindestens einen benutzerspezifischen Fahrparameter und/oder die Tendenz der Änderung des mindestens einen benutzerspezifischen Fahrparameters, die zu dem zweiten Fahrzeug (200) gesendet werden, zu zeigen.

7. Fahrsteuerungssystem (1) nach Anspruch 6, wobei die grafische Benutzerschnittstelleneinheit (40) des Weiteren dafür eingerichtet ist, zwei oder mehr verschiedene Benutzerprofile zu zeigen.

8. Fahrsteuerungssystem (1) nach Anspruch 7, wobei die grafische Benutzerschnittstelleneinheit (40) des Weiteren dafür eingerichtet ist, eine Eingabe des Benutzers zu empfangen, die aus den verschiedenen in der grafischen Benutzerschnittstelleneinheit (40) angezeigten Benutzerprofilen ausgewählt ist.

9. Fahrsteuerungssystem (1) nach Anspruch 1, wobei das Benutzerprofil des Weiteren mindestens eine Umgebungspräferenz des Benutzers umfasst.

10. Fahrsteuerungssystem (1) nach Anspruch 1, wobei das Benutzerprofil des Weiteren Informationen über mindestens eine benutzerspezifische Einrichtung umfasst.

11. Fahrzeug, umfassend ein Fahrerassistenzsystem, wobei das Fahrerassistenzsystem dafür eingerichtet ist, mit einem Fahrsteuerungssystem (1) nach einem der vorangehenden Ansprüche 1 bis 10 zusammenzuarbeiten.

12. Fahrzeug nach Anspruch 11, dafür eingerichtet, vollautomatisch angetrieben zu werden.

13. Verfahren für eine Fahrsteuerung für ein Fahrzeug, wobei das Verfahren umfasst:
- Generieren (S1) mindestens eines benutzerspezifischen Fahrparameters mindestens eines Benutzers, der mit einem ersten Fahrzeug (100) fährt,
- Speichern (S2) des mindestens einen benutzerspezifischen Fahrparameters in einer Datenspeichereinheit (20) auf der Grundlage einer Eingabe des Benutzers,
- Aktivieren (S3) des gespeicherten mindestens einen benutzerspezifischen Fahrparameters in einem zweiten Fahrzeug (200), das durch den Benutzer genutzt werden soll,
- Senden (S4) des mindestens einen benutzerspezifischen Fahrparameters des Benutzers von der Datenspeichereinheit (20) zu dem zweiten Fahrzeug (200),
- Generieren eines Benutzerprofils des Benutzers auf der Grundlage des mindestens einen benutzerspezifischen Fahrparameters und
- Steuern (S5) des zweiten Fahrzeugs (200) auf der Grundlage des mindestens einen benutzerspezifischen Fahrparameters,
wobei die Sensoreinheit (10) in dem ersten Fahrzeug (100) angeordnet werden kann,
wobei der mindestens eine benutzerspezifische Fahrparameter auf dem Fahrverhalten eines Fahrers des ersten Fahrzeugs (100) basiert,
wobei das Senden durch eine in eine Mobilvorrichtung des Benutzers integrierte Mobilanwendung ausgeführt werden kann, und
wobei das Verfahren des Weiteren umfasst, den mindestens einen benutzerspezifischen Fahrparameter nur dann zu senden, wenn der Benutzer den mindestens einen benutzerspezifischen Fahrparameter in dem zweiten Fahrzeug (200) aktiviert.

14. Computerprogrammelement für ein Fahrsteuerungssystem (1) nach einem der Ansprüche 1 bis 10, das, wenn es durch ein Verarbeitungselement ausgeführt wird, dafür ausgelegt ist, die Verfahrensschritte des Verfahrensanspruchs 13 durchzuführen.

## Revendications

1. Système de commande de conduite (1) pour un véhicule, comprenant :
- une unité de capteur (10),
- une unité de stockage de données (20),
- des moyens de communication d'utilisateur (30) et
- une unité de commande,
l'unité de capteur (10) pouvant être agencée dans un premier véhicule (100) et configurée pour générer au moins un paramètre de conduite spécifique à l'utilisateur d'au moins un utilisateur se déplaçant avec le premier véhicule (100), le au moins un paramètre de conduite spécifique à l'utilisateur étant basé sur un comportement de conduite du conducteur du premier véhicule (100),
les moyens de communication d'utilisateur (30) étant configurés pour recevoir une entrée de l'utilisateur pour stocker le au moins un paramètre de conduite spécifique à l'utilisateur dans l'unité de stockage de données (20) et activer le au moins un paramètre stocké de conduite spécifique à l'utilisateur dans un second véhicule (200) à occuper par l'utilisateur,
l'unité de commande étant configurée pour transmettre le au moins un paramètre de conduite spécifique à l'utilisateur de l'utilisateur, de l'unité de stockage de données (20) au second véhicule (200),
l'unité de commande étant configurée pour commander le second véhicule (200) sur la base du au moins un paramètre transmis de conduite spécifique à l'utilisateur,
l'unité de commande étant en outre configurée pour générer un profil d'utilisateur de l'utilisateur sur la base du au moins un paramètre de conduite spécifique à l'utilisateur, l'unité de commande étant configurée pour transmettre le au moins un paramètre de conduite spécifique à l'utilisateur uniquement si l'utilisateur active le au moins un paramètre de conduite spécifique à l'utilisateur dans le second véhicule (200), et
les moyens de communication d'utilisateur (30) pouvant être exécutés par une application mobile intégrée dans un dispositif mobile de l'utilisateur.

2. Système de commande de conduite (1) selon la revendication 1, l'utilisateur étant un conducteur ou un passager dans le premier véhicule (100) et/ou un conducteur ou un passager dans le second véhicule (200).

3. Système de commande de conduite (1) selon la revendication 1 ou 2, le au moins un paramètre de conduite spécifique à l'utilisateur étant un élément parmi une distance jusqu'à un véhicule précédent, un positionnement sur les voies, une vitesse de virage, une correction de voie, un dépassement, une vitesse de freinage, une accélération d'angle de braquage et/ou une distance de freinage.

4. Système de commande de conduite (1) selon la revendication 1, l'unité de capteur (10), l'unité de stockage de données (20) et/ou l'unité de commande comprenant un élément de communication sans fil.

5. Système de commande de conduite (1) selon l'une quelconque des revendications précédentes, l'unité de commande étant configurée pour analyser une tendance d'un changement du au moins un paramètre de conduite spécifique à l'utilisateur stocké dans l'unité de stockage de données (20) et régler le au moins un paramètre de conduite spécifique à l'utilisateur sur la base de la tendance.

6. Système de commande de conduite (1) selon la revendication 1, comprenant en outre une unité d'interface utilisateur graphique (40) configurée pour présenter le profil d'utilisateur, le au moins un paramètre de conduite spécifique à l'utilisateur et/ou la tendance du changement du au moins un paramètre de conduite spécifique à l'utilisateur, étant transmis au second véhicule (200).

7. Système de commande de conduite (1) selon la revendication 6, l'unité d'interface utilisateur graphique (40) étant en outre configurée pour présenter deux profils d'utilisateur différents ou plus.

8. Système de commande de conduite (1) selon la revendication 7, l'unité d'interface utilisateur graphique (40) étant en outre configurée pour recevoir une entrée de l'utilisateur choisi parmi les différents profils d'utilisateur présentés dans l'unité d'interface utilisateur graphique (40).

9. Système de commande de conduite (1) selon la revendication 1, le profil d'utilisateur comprenant en outre au moins une préférence ambiante de l'utilisateur.

10. Système de commande de conduite (1) selon la revendication 1, le profil d'utilisateur comprenant en outre des informations concernant au moins une installation spécifique à l'utilisateur.

11. Véhicule comprenant un système d'aide à la conduite, le système d'aide à la conduite étant configuré pour fonctionner avec un système de commande de conduite (1) selon l'une quelconque des revendications 1 à 10 précédentes.

12. Véhicule selon la revendication 11 étant configuré pour être propulsé de manière entièrement automatique.

13. Procédé pour une commande de conduite pour un véhicule, comprenant de :
- générer (S1) au moins un paramètre de conduite spécifique à l'utilisateur d'au moins un utilisateur se déplaçant avec un premier véhicule (100),
- stocker (S2) le au moins un paramètre de conduite spécifique à utilisateur dans une unité de stockage de données (20) sur la base d'une entrée de l'utilisateur,
- activer (S3) le au moins un paramètre stocké de conduite spécifique à l'utilisateur dans un second véhicule (200) à occuper par l'utilisateur,
- transmettre (S4) le au moins un paramètre de conduite spécifique à l'utilisateur de l'utilisateur, de l'unité de stockage de données (20) au second véhicule (200),
- générer un profil d'utilisateur de l'utilisateur sur la base du au moins un paramètre de conduite spécifique à l'utilisateur, et
- commander (S5) le second véhicule (200) sur la base du au moins un paramètre de conduite spécifique à utilisateur,
l'unité de capteur (10) pouvant être agencée dans le premier véhicule (100),
le au moins un paramètre de conduite spécifique à l'utilisateur étant basé sur un comportement de conduite du conducteur du premier véhicule (100),
la transmission pouvant être exécutée par une application mobile intégrée dans un dispositif mobile de l'utilisateur, et
le procédé comprenant en outre de transmettre le au moins un paramètre de conduite spécifique à l'utilisateur uniquement si l'utilisateur active le au moins un paramètre de conduite spécifique à l'utilisateur dans le second véhicule (200).

14. Élément de programme informatique pour un système de commande de conduite (1) selon les revendications 1 à 10 qui, lorsqu'il est exécuté par un élément de traitement, est adapté pour mettre en œuvre les étapes de procédé de la revendication de procédé 13.
